Europäisches Patentamt

European Patent Office

Office européen des brevets

(11) Veröffentlichungsnummer: **0 246 644**
**A2**

# (12) EUROPÄISCHE PATENTANMELDUNG

(21) Anmeldenummer: 87107377.1

(51) Int. Cl.⁴: **H02H 3/04**

(22) Anmeldetag: 21.05.87

(30) Priorität: 23.05.86 DE 3617390

(43) Veröffentlichungstag der Anmeldung:
25.11.87 Patentblatt 87/48

(84) Benannte Vertragsstaaten:
CH DE FR GB LI SE

(71) Anmelder: DODUCO KG. Dr. Eugen
Dürrwächter
Im Altgefäll 12 Postfach 480
D-7530 Pforzheim(DE)

(72) Erfinder: Normann, Norbert, Dr.Dipl.-Phys.
Westendstrasse 3
D-7530 Pforzheim(DE)
Erfinder: Uhl, Günter, Dr.Dipl.-Ing.
Landhausstrasse 45
D-7267 Unterreichenbach(DE)

(74) Vertreter: Twelmeier, Ulrich, Dipl.Phys. et al
Westliche Karl-Friedrich-Strasse 29-31
D-7530 Pforzheim(DE)

(54) **Vorrichtung zum Melden von Stromimpulsen, welche durch den Erdleiter von Überspannungsableitern in Hochspannungsnetzen fliessen.**

(57) Die Vorrichtung zum Melden von Stromimpulsen, welche durch den Erdleiter (1) von Überspannungsableitern in Hochspannungsnetzen fließen, besteht aus einem den Erdleiter (1) umgebenden ringförmigen, geschlossenen Ferritkern (2) und aus einem Detektorschaltkreis, welcher eine den Ferritkern (2) umgebende elektrische Wicklung (3) mit höchstens 10 Windungen sowie als Signalgeber einen elektrisch/optischen Wandler (LED) aufweist, der beim Auftreten eines Stromimpulses im Erdleiter (1) einen zählbaren Impuls abgibt.

EP 0 246 644 A2

# Vorrichtung zum Melden von Stromimpulsen, welche durch den Erdleiter von Überspannungsableitern in Hochspannungsnetzen fließen

Die Erfindung geht aus von einer Vorrichtung mit den im Oberbegriff des Anspruchs 1 angegebenen Merkmalen.

Hochspannungsnetze enthalten zum Schutz vor Überspannungen, die z.B. durch Blitzschlag verursacht werden können, Überspannungsableiter, die bei Erreichen ihrer Ansprechschwelle über einen Erdleiter einen Ableitstrom zur Erde ableiten und dadurch einen weiteren Spannungsanstieg verhindern. Man weiss, daß Überspannungsableiter altern, wobei ihr Widerstand abnimmt, was zu zunehmenden Leckströmen führt. Es ist deshalb wichtig, daß die Überspannungsableiter ausgetauscht werden, bevor die Leckströme über sie zu groß werden.

Da man weiss, daß die Anzahl der Ableitstromimpulse ein Maß für den Grad der Alterung von Überspannungsableitern ist, ist es Stand der Technik, die Anzahl der Ableitstromimpulse zu zählen und die Überspannungsableiter nach Erreichen einer vorgegebenen Ableitstromimpulszahl auszutauschen.

Die Schwierigkeit, die auftretenden Ableitstromimpulse zu erfassen, sind darin begründet, daß in den Ableitstromimpulsen Stromstärken bis zu 150 kA auftreten, wobei auch Impulse mit demgegenüber verhältnismäßig niedrigen Stromstärken von 10 A noch erfaßt werden sollen. Dabei haben die Ableitstromimpulse meist eine Anstiegszeit von nur wenigen μs sowie Halbwertsbreiten in der Größenordnung zwischen 10 und 50 μs. Das bedeutet, daß die Stromanstiegsgeschwindigkeiten nicht kleiner sind als 1 A/μs und nach oben hin praktisch unbegrenzt sind.

Eine bekannte Vorrichtung zum Überwachen von Überspannungsableitern, von welcher diese Erfindung ausgeht, verwendet einen Impulstransformator; dieser besteht aus einem ringförmigen Ferritkern, durch welchen der Erdleiter des Überspannungsableiters gerade, also mit nur einer Windung, hindurch geführt ist. Der ringförmige Ferritkern trägt eine Wicklung mit einer größeren Anzahl von Windungen, welche es gestattet, die im normalen Betriebszustand im Erdleiter auftretenden, mit der Frequenz des im Hochspannungsnetz übertragenen Wechselstromes schwingenden Leckströme, deren Amplitude sich in der Größenordnung von 1 mA und darunter bewegt, zu überwachen. Diese Leckströme induzieren in die Wicklung des Ferritkerns eine Spannung, deren Amplitude im wesentlichen der Amplitude des Leckstroms proportional ist, weil die Leckströme den Ferritkern im linearen Bereich seiner Kennlinie betreiben. Da die Höhe der Leckströme den Grad der Alterung der Überspannungsableiter wiederspiegelt, kann durch eine von Zeit zu Zeit erfolgende Messung der vom Leckstrom in der Wicklung erzeugten Wechselspannung der Zustand des jeweiligen Überspannungsableiters kontrolliert werden. Daneben ist in der bekannten Vorrichtung ein Zähler vorgesehen, welcher die am Überspannungsableiter auftretenden, sich in Ableitstromimpulsen äussernden Überspannungen zählt. Ein jeder Ableitstromimpuls induziert in die Wicklung des Ferritkerns einen Spannungsimpuls, dessen Amplitude dadurch begrenzt wird, daß der Ferritkern durch die Ableitstromimpulse in den Bereich der magnetischen Sättigung getrieben wird. Wegen der verhältnismäßig großen Windungszahl der Wicklung, welche für das Messen der niedrigen Leckströme erforderlich ist, ist die von den Ableitstromimpulsen in die Wicklung induzierte Spannung aber immer noch so hoch, daß der der Wicklung nachgeschaltete Impulszähler durch einen Varistor, welcher die Spannung in der Wicklung begrenzt, geschützt werden muß. Nachteilig bei der bekannten Überwachungsvorrichtung ist, daß sie die Messung von Leckströmen ermöglichen soll, deren Amplitude 3 bis 8 Größenordnungen niedriger als die Amplitude der Ableitstromimpulse liegt. Diese Forderung an die bekannte Vorrichtung führt dazu, daß die bekannte Vorrichtung auf unterschiedlich hohe und unterschiedlich schnell ansteigende Ableitstromimpulse mit unterschiedlicher Empfindlichkeit anspricht. Gleichzeitig wird dadurch ein verhältnismäßig aufwendiger Aufbau der bekannten Vorrichtung bedingt. Ein weiterer Nachteil der bekannten Überwachungsvorrichtung liegt darin, daß bei einem Versagen des Varistors der diesem nachgeschaltete Impulszähler leicht zerstört wird. Ein mehrjähriger störungsfreier Betrieb ist dadurch nicht gewährleistet.

Der Erfindung liegt die Aufgabe zugrunde, eine Vorrichtung zum Melden von Stromimpulsen, welche durch den Erdleiter von Überspannungsableitern in Hochspannungsnetzen fließen, zu schaffen, welcher einfach aufgebaut ist, über mehrere Jahre hinweg störungsfreien Betrieb erlaubt und auf Ableitstromimpulse mit Stromstärken zwischen 10 A und 150 kA bei Stromanstiegsgeschwindigkeiten von mindestens 1 A/μs und Ableitstromimpulsanstiegszeiten bis herab zu wenigen μs gleichermaßen empfindlich ist und zählbare Impulse liefert.

Diese Aufgabe wird gelöst durch eine Vorrichtung mit den im Patentanspruch 1 angegebenen Merkmalen. Vorteilhafte Weiterbildungen der Erfindung sind Gegenstand der Unteransprüche.

Dadurch, daß anstelle eines Ferritkerns mit Luftspalt ein Ferritkern in Gestalt eines geschlossenen Ringes verwendet wird, erreicht man, daß der Ferritkern schon bei niedrigen Anstiegsgeschwindigkeiten des Ableitstromes magnetisch gesättigt wird, so daß der Ferritkern bei praktisch allen vorkommenden Ableitstromimpulsen im Bereich der magnetischen Sättigung betrieben wird. Man erhält deshalb in der Wicklung, welche sich auf dem Ferritkern befindet, bereits bei niedrigen Ableitstromamplituden und niedrigen Ableitstromänderungsgeschwindigkeiten einen brauchbaren Spannungsimpuls, dessen Amplitude sich mit steigender Ableitstromamplitude und steigender Anstiegsgeschwindigkeit der Ableitstromimpulse kaum noch ändert. Die Spannungsamplitude hängt in dem vorgesehenen Arbeitsbereich der Meldevorrichtung bei vorgegebenem Ferritmaterial im wesentlichen nur noch von der Windungszahl der Wicklung auf dem Ferritkern ab, und diese wird mit höchstens 10 Windungen, vorzugsweise 3 oder 5 Windungen deutlich niedriger gewählt als bei der eingangs beschriebenen bekannten Vorrichtung, so niedrig, daß ausser der Begrenzung der Spannungsamplitude durch das Betreiben des Ferritkerns im Bereich seiner magnetischen Sättigung weitere Maßnahmen zur Spannungsbegrenzung nicht unbedingt erforderlich (wenn auch möglich) sind, um eine nachgeordnete elektronische Schaltung, namentlich den Signalgeber, in welchen die in der Wicklung entstehenden Spannungsimpulse eingespeist werden, vor einem Schaden durch eine zu hohe Spannungsamplitude zu schützen.

Als Signalgeber wird erfindungsgemäß ein elektrisch/optischer Wandler verwendet, durch den eine galvanische Trennung zwischen der erfindungsgemäßen Meldevorrichtung und einem anzuschließenden Zähler für die gemeldeten Stromimpulse erfolgt. Die galvanische Trennung dient zum einen dem Berührungsschutz und zum andern dem Schutz des Zählers vor Überspannungen im Fall einer Funktionsstörung der erfindungsgemäßen Meldevorrichtung. Die Verwendung eines elektrisch/optischen Wandlers als Signalgeber hat den weiteren Vorteil, daß die erfindungsgemäße Meldevorrichtung einerseits mit einem Zählwerk zu einer kompakten Baueinheit zusammengefasst werden kann (in diesem Falle verwendet man zwischen der erfindungsgemäßen Meldevorrichtung und dem Zählgerät als Verbindungsglied einen Optokoppler), und daß andererseits eine Fernübertragung des optischen Signals über einen Lichtwellenleiter an ein Zählgerät möglich ist ( in diesem Fall verwendet man als elektrisch/optischen Wandler in der erfindungsgemäßen Meldevorrichtung am einfachsten eine Leuchtdiode und zum Empfang des optischen Signals im Zählgerät als optisch/elektrischen Wandler eine Fotodiode).

Damit der elektrisch/optische Wandler auf Spannungsimpulse beider Polarität gleichermaßen anspricht, ist zwischen der Wicklung, in welcher die Spannungsimpulse entstehen, und dem Wandler vorzugsweise ein Gleichrichter vorgesehen.

Die Dauer der in der Wicklung entstehenden Spannungsimpulse hängt von der Anstiegsgeschwindigkeit der Ableitstromimpulse ab, wobei die Mindestdauer der Impulse durch die materialmäßig vorgegebene Grenzfrequenz des verwendeten Ferritkerns bestimmt ist; bei einer typischen Grenzfrequenz von 3 MHz beträgt die Mindestdauer der Spannungsimpulse demnach rund 0,3 $\mu$s. Derart kurze Spannungsimpulse treten wegen der teilweise extremen Stromänderungsgeschwindigkeiten tatsächlich auf. Diese kurzen Spannungsimpulse werden vorzugsweise durch eine elektronische Schaltung künstlich verlängert, so daß mit den verlängerten Spannungsimpulsen eine handelsübliche Leuchtdiode zuverlässig betrieben werden kann. Für das Verlängern der Impulse benötigt man keine Fremdenergie, vielmehr kann die Schaltung zum Verlängern der Impulse aus dem Energieinhalt der Impulse selbst betrieben werden. Diese Schaltung besteht im Kern vorzugsweise aus einem R-C-Glied, dessen Kondensator durch den Strom aus dem zu verlängernden Impuls aufgeladen wird und dessen Endladezeit, welche länger ist als die Aufladezeit, die Dauer der verlängerten Impulse bestimmt. Beim Entladen des Kondensators fällt die Stromstärke normalerweise exponentiell ab, was für den Betrieb einer Leuchtdiode nicht günstig ist. Vorzugsweise ist deshalb eine Stabilisierungsschaltung vorgesehen, in welche der Entladestrom des Kondensators eingespeist wird. Die Stabilisierungsschaltung hält den Entladestrom für eine gewissen Zeitspanne auf einem gleichbleibendem Niveau, wodurch ein einwandfreier Betrieb einer Leuchtdiode möglich ist. Zweckmäßigerweise umfasst die Stabilisierungsschaltung im wesentlichen einen Transistor, über den sich der Kondensator entlädt und dessen Ausgangsstrom den elektrisch/optischen Wandler speist, und eine im Basis-Emitterkreis des Transistors liegende Zenerdiode, über welche wenigstens ein Teil der Kondensatorspannung abfällt. Solange zwischen Basis und Emitter des Transistors die Zenerspannung abfällt, ist der Transistor leitend und speist einen im wesentlichen gleichbleibenden Strom in den elektrisch/optischen Wandler ein.

Einzelheiten der Schaltung können dem beigefügten Schaltbild entnommen werden, welches ein bevorzugtes Ausführungsbeispiel der erfindungsgemäßen Meldevorrichtung zum Gegenstand hat.

Auf den Erdleiter 1 eines Überspannungsableiters ist ein Ferritkern 2 in Gestalt eines geschlossenen Ringes aufgeschoben. Der Ringkern 2 trägt eine elektrische Wicklung 3 mit 3 Windungen. Die Wicklung 3 liegt in Reihe mit einem Widerstand $R_1$ und ist mit dem Eingang eines Gleichrichters 4 verbunden. Der Gleichrichter 4 ist ein aus vier untereinander gleichen Dioden $D_1$ bis $D_4$ gebildeter Brückengleichrichter,

3

dessen Ausgang mit einem aus einem Widerstand $R_2$ und einem Kondensator C bestehender verbunden ist. Auf das RC-Glied folgt eine Stabilisierungsschaltung 5. Diese umfasst einen Transis Im Basis-Emitter-Kreis des Transistors T liegt eine Zenerdiode $D_5$, an welcher ein Teil der Spar Kondensators C abfällt. Die restliche Kondensatorspannung fällt an einem Widerstand $R_3$ ab einerseits in Reihe mit der Zenerdiode $D_5$ und andererseits im Basis-Kollektor-Kreis des Transisto Zwischen dem Kondensator C und dem Widerstand $R_3$ ist noch eine Induktivität L vorgesehen. Emitter-Kreis des Transistors T liegen ausser der Zenerdiode $D_5$ in Reihe ein Widerstand $R_4$ Leuchtdiode LED.

Zweckmäßigerweise befinden sich alle Elemente mit Ausnahme des Ferritkerns 2 mit seiner W auf einer gemeinsamen Platine 6. An die Stelle der Leuchtdiode LED tritt zweckmäßigerw Optokoppler, wenn das optische Signal an ein Zählgerät nicht fernübertragen wird, sondern ein Z mit der erfindungsgemäßen Meldevorrichtung zu einer Baueinheit zusammengefasst wird.

In einem ausgeführten Beispiel wurden für die dargestellte Schaltung folgende Bauelemente ver Ferrit-Ringkern 2: Siemens AG, Werkstoff N 30, Typ R 34/10

$$R_1 = 100\,\Omega$$
$$R_2 = 680\,\Omega$$
$$R_3 = 1,8\ k\Omega$$
$$R_4 = 150\,\Omega$$

$\left.\right\}$ Metallfilmwiderstände 0,25 W

$D_1, D_2, D_3, D_4$: BYW 98-200
$D_5$: ZTE 5,1 V
LED: SFH 485
C = 1nF, WIMA FKS
L = 1mH
npn-Transistor T: 2NSSS1

Falls gewünscht kann vor dem Gleichrichter 4 zur Spannungsbegrenzung noch ein Varistor 7 ange net werden. Geeignet ist der Typ SIO V-S 07 K 75.

Die dargestellte Schaltung arbeitet wie folgt:

Ein in der Erdleitung fliessender Ableitstromimpuls erzeugt in der Wicklung 3 einen Spannungsimp welcher durch den Gleichrichter 4 gleichgerichtet wird und über den Widerstand $R_2$ den Kondensator auflädt. Der Kondensator entlädt sich über den Transistor T, den Widerstand $R_4$ und die Leuchtdiode LE solange bis der an der Zenerdiode $D_5$ abfallende Teil der Kondensatorspannung die Zenerspannu erreicht. Die von der Wicklung 3 gelieferten, mindestens rund 0,3 $\mu$s langen Impulse werden auf die Weise künstlich auf wengistens eine 1$\mu$s, vorzugsweise rund 3$\mu$s verlängert; während dieser Zeitspan steht zum Betrieb der Leuchtdiode ein Strom von 20 mA zur Verfügung.

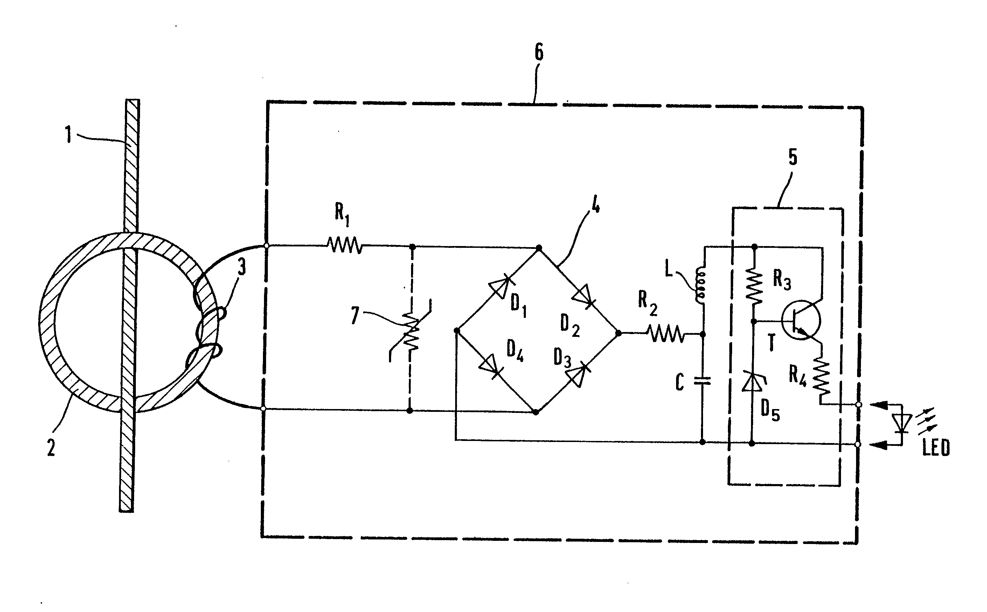

## Ansprüche

1. Vorrichtung zum Melden von Stromimpulsen, welche durch den Erdleiter vor Überspannungsableitern in Hochspannungsnetzen fließen, bestehend aus einem den Erdleiter umgebender ringförmigen Ferritkern und aus einem Detektorschaltkreis, welcher eine den Ferritkern umgebende elektrische Wicklung sowie einen Signalgeber aufweist, der beim Auftreten eines Stromimpulses im Erdleiter einen zählbaren Impuls abgibt, gekennzeichnet durch die Kombination der nachstehenden Merkmale a) bis c):

a) der Ferritkern (2) ist ein geschlossener Ring;
b) die Wicklung (3) hat höchstens zehn Windungen;
c) der Signalgeber (LED) ist ein elektrisch/optischer Wandler.

2. Vorrichtung nach Anspruch 1, dadurch gekennzeichnet, daß die Wicklung (3) drei oder vier Windungen hat.

3. Vorrichtung nach Anspruch 1, dadurch gekennzeichnet, daß der elektrisch/optische Wandler (LED) eine Leuchtdiode ist.

4

4. Vorrichtung nach einem der vorstehenden Ansprüche,
dadurch gekennzeichnet, daß zwischen der Wicklung (3) und dem elektrisch/opitschen Wandler (LED) ein Gleichrichter (4) vorgesehen ist.

5. Vorrichtung nach einem der vorstehenden Ansprüche,
dadurch gekennzeichnet, daß zwischen der Wicklung (3) und dem elektrisch/optischen Wandler (LED) eine Schaltung (R$_2$,C,L,5) zur Verlängerung der in der Wicklung (3)induzierten Spannungsimpulse vorgesehen ist.

6. Vorrichtung nach Anspruch 5,
dadurch gekennzeichnet, daß die Schaltung (R$_2$,C,L,5) zum Verlängern der induzierten Impulse zwischen dem Gleichrichter (4) und dem elektrisch/optischen Wandler (LED) angeordnet ist.

7. Vorrichtung nach Anspruch 6,
dadurch gekennzeichnet, daß die Schaltund(R$_2$,C,L,5) zum Verlängern der induzierten Impulse ein R-C-Glied (R$_2$,C) umfaßt, dessen Kondensator (C) durch den Strom aus dem zu verlängernden Impuls aufgeladen wird und dessen Entladezeit die Länge des verlängerten Impulses bestimmt.

8. Vorrichtung nach Anspruch 7,
dadurch gekennzeichnet, daß der Kondensator (C) über eine Stabilisierungsschaltung (5) mit dem elektrisch/optischen Wandler (LED) verbunden ist.

9. Vorrichtung nach Anspruch 8,
dadurch gekennzeichnet, daß die Stabilisierungsschaltung (5) einen Transistor (T), über den sich der Kondensator (C) entlädt und dessen Ausgangsstrom den elektrisch/optischen Wandler (LED) speist, und eine im Basis-Emitter-Kreis der Transistors (T) liegende Zenerdiode (D$_5$) entlädt, über welcher wenigstens ein Teil der Kondensatorspannung abfällt.

0 246 644